# EUROPÄISCHE PATENTSCHRIFT

(11) **EP 2 423 039 B1**
(45) Veröffentlichungstag und Bekanntmachung des Hinweises auf die Patenterteilung: **16.01.2013**
(21) Anmeldenummer: 11177689.4
(22) Anmeldetag: 16.08.2011
(51) Int. Cl.: B60N 2/52, B60N 2/50, B60N 2/54

(54) **Fahrzeugschwingungsabfangsvorrichtung**
Vibration absorbing device for vehicle
Dispositif d'amortissement de vibrations pour véhicule

(30) Priorität: 30.08.2010 DE 102010035888
(43) Veröffentlichungstag der Anmeldung: 29.02.2012
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- EP-A1- 0 054 880
- EP-A1- 0 054 947
- EP-A1- 1 035 258
- DE-A1-102008 052 960
- GB-A- 1 199 577
- US-A1- 2009 184 448

## Beschreibung

Die Erfindung betrifft eine Fahrzeugschwingungsabfangsvorrichtung mit einem Unterteil und einem gegenüber dem Unterteil in Fahrzeuglängsrichtung und/oder Fahrzeugbreitenrichtung mittels einer Federeinrichtung federnd gelagertem Oberteil gemäß dem Oberbegriff des Patentanspruches 1 (siehe z.B. die EP 0 054 880 A1).

Sogenannte Horizontalfederungen werden bei Fahrzeugsitzen häufig derart realisiert, dass mindestens eine Spiralfeder, die horizontal angeordnet ist, ein Unterteil mit einem Oberteil des Fahrzeugsitzes federnd verbindet. Hierdurch kann bei Einleitung einer horizontalen Schwingung, wie es beispielsweise bei einem Überfahren einer Erhebung auf der Straße stattfinden kann, das Oberteil gegenüber dem Unterteil nach vorne schwingen und fängt somit die horizontal eingeleiteten Schwingungen federnd ab. Zusätzlich werden selbstverständlich vertikal eingeleitete Schwingungen durch separate Federeinrichtungen in vertikaler Richtung abgefangen.

Derartige auf horizontal einwirkende bzw. eingeleitete Schwingungen reagierende Federeinrichtungen weisen den Nachteil auf, dass die daraus resultierenden Federschwingungen nicht abgedämpft werden. Vielmehr kann daraus ein Sichaufschwingen des gesamten Systems bis hin zu dem Entstehen von Resonanzeffekten entstehen, sofern die Spiralfeder eine entsprechend große Federkraft aufweist und demzufolge hart genug ausgestaltet ist, um sämtliche Schwingungen abzufedern. Wenn die Spiralfeder hingegen mit einer geringeren Federkraft ausgestaltet ist, besteht die Gefahr, dass die Spiralfeder an ihre Endanschläge während einer Federschwingung kommt und somit das Oberteil während des Schwingungsvorgangs ruckartig gestoppt wird. Beide Effekte sind unerwünscht.

Demzufolge liegt der vorliegenden Erfindung die Aufgabe zugrunde, eine Fahrzeugschwingungsabfangsvorrichtung mit einem Unterteil und einem gegenüber dem Unterteil in Fahrzeuglängsrichtung und/oder Fahrzeugbreitenrichtung federnd gelagertem Oberteil zur Verfügung zu stellen, welche einen erhöhten Komfort für die das Fahrzeug benutzende Person bei Einleitung von horizontal ausgerichteten Schwingungen zur Verfügung stellt.

Diese Aufgabe wird gemäß den Merkmalen des Patentanspruches 1 gelöst.

Ein wesentlicher Gedanke der Erfindung liegt darin, dass bei einer Fahrzeugschwingungsabfangsvorrichtung mit einem Unterteil und einem gegenüber dem Unterteil in Fahrzeuglängsrichtung und/oder Fahrzeugbreitenrichtung mittels einer Federeinrichtung federnd gelagertem Oberteil, wobei die Fahrzeuglängsrichtung und/oder die Fahrzeugbreitenrichtung Federwegrichtungen darstellen, mindestens einen Dämpfer angeordnet ist, der sich in einer von der Fahrzeuglängsrichtung und der Fahrzeugbreitenrichtung aufgespannten Ebene mit seiner Längsausdehnung erstreckt, um eine senkrecht zur Ebene ausgerichtete Achse am Unterteil schwenkbar gelagert ist und mit einem ersten Ende mit dem Oberteil verbunden ist. Eine derartige Fahrzeugschwingungsabfangsvorrichtung ermöglicht die Anordnung eines horizontal ausgerichteten Dämpfers, der die Schwingungen des Oberteils in horizontaler Richtung bzw. parallel zu einem Boden des Fahrzeugs abdämpft und somit eine Reduzierung der Schwingungsamplituden ermöglicht. Ein derartiger Dämpfer kann sowohl alleine als auch in Kombination mit einer Feder, wie beispielsweise einer Spiralfeder, verwendet werden, wobei die Schwingung der Spiralfeder durch den Dämpfer abgedämpft werden würde. Dies hat zur Folge, dass die anfangs in die Vorrichtung eingeleiteten Schwingungen, wie sie beispielsweise durch das Überfahren einer Kuppe oder das Durchfahren einer Mulde nicht nur in vertikaler sondern auch in horizontaler Richtung auftreten, schnell abgeschwächt werden können.

Vorteilhaft ist hierfür der mindestens eine Dämpfer in einer unausgelenkten Lage des federnd gelagerten Oberteils derart angeordnet, dass er sich in seiner Längsausdehnung senkrecht zur Federwegrichtung erstreckt. Dies bedeutet, dass, wenn die Federwegrichtung in Fahrzeuglängsrichtung verläuft, der Dämpfer in der unausgelenkten Lage des federnd gelagerten Oberteils sich in Fahrzeugbreitenrichtung mit seiner Längsausdehnung erstreckt, so dass er senkrecht zu der Fahrzeuglängsrichtung ausgerichtet ist. Ein derartig angeordneter Dämpfer würde dann dadurch, dass er mit seinem ersten Ende an dem Oberteil befestigt ist, durch ein Verschieben bzw. Schwingen des Oberteils in horizontaler Richtung unterschiedlich stark ausgelenkt werden, wobei er gleichzeitig um die Achse eine Schwenkbewegung durchführt. Hierfür ist die Achse entweder am zweiten Ende des Dämpfers oder auch bezüglich seiner Längsausdehnung weiter zur Mitte des Dämpfers hin angeordnet. Die Anordnung der Achse hängt u. a. davon ab, ob der Dämpfer eine harte oder weiche Dämpfung ausführen soll, denn der Abstand der Achse zu dem ersten Ende des Dämpfers, welches an dem Oberteil befestigt ist und bei einer Federwegrichtung in Fahrzeuglängsrichtung nach vorne und nach hinten schwingen würde bestimmt aufgrund der Schwenkbewegung mit einem größeren oder kleineren Radius den Härtegrad des Dämpfers.

Der Dämpfer ist vorteilhaft derart ausgebildet, dass bei Zugbeanspruchung des Dämpfers seine dämpfend wirkende erste Dämpferkraft unterschiedlich zu der bei Druckbeanspruchung des Dämpfers wirkende zweite Dämpferkraft ist. Dies bedeutet, dass bei einem Ausfahren des Dämpfers beispielsweise eine höhere gegenwirkende Dämpfungskraft anliegt, als bei einem Einfahren des Dämpfers, also bei einer Druckstufe anstelle eine Zugstufe des Dämpfers. Das Einfahren des Dämpfers findet bei einem Zurückfedern in die Mittellage, also in die unausgelenkte Lage, statt. Während eines derartigen Einfahrens besteht ausreichend Federweg für das erste Ende des Dämpfers, welches mit dem Oberteil befestigt ist und sich in Vorwärts- und Rückwärtsrichtung bewegt, sofern die Federwegrichtung die Fahrzeuglängsrichtung ist, da über die Mittellage hinaus ein Federweg in die entgegensetzte Richtung vorhanden ist. Ein derartiges Unterscheiden unterschiedlicher Dämpfungsgrade bzw. Dämpferkräfte während der Zugstufe und der Druckstufe des Dämpfers hat eine erhöhte Schwingungsisolation der gesamten Vorrichtung und somit ein schnelles Abklingen der Federschwingung des federnden Oberteils zur Folge. Selbstverständlich können die unterschiedlichen Dämpfungskräfte, für die Zugstufe und Druckstufe einstellbar sein, d. h. sie können werksseitig oder durch den Benutzer des Fahrzeuges in ihrer Größe verstellt werden.

Derartige Fahrzeugschwingungsabfangsvorrichtungen werden vorteilhaft nicht nur für Fahrzeugsitze mit einem Unter- und einem Oberteil, sondern auch für Fahrzeugkabinen, wie sie beispielsweise bei Traktoren verwendet werden, eingesetzt.

Wie bereits erwähnt, kann die Federeinrichtung mindestens eine sich in Federwegrichtung erstreckende erste Spiralfeder umfassen, wobei deren erstes Ende mit dem Oberteil und deren zweites Ende mit dem Unterteil verbunden ist. Somit findet bei einem Verschieben des Oberteils gegenüber dem Unterteil während einer Einleitung einer externen Schwingung ebenso ein Sichausdehnen und Zusammenziehen der ersten Spiralfeder statt, während der Dämpfer ein Abdämpfen dieser Federschwingung bewirkt.

Gemäß einer bevorzugten Ausführungsform umfasst die Federeinrichtung mindestens eine im oder am Dämpfer angeordnete zweite Spiralfeder, deren erstes Ende mit dem ersten Ende des Dämpfers oder denjenigen Element des Oberteils, an dem das erste Ende des Dämpfers befestigt ist, verbunden ist und deren zweites Ende mit einem zweiten Ende des Dämpfers oder einem anderen Bereich des Dämpfers verbunden ist. Hierdurch ist die Verwendung einer Dämpfer-Feder-Einheit möglich, die in integrierter Form vorhanden sein kann. Die zweite Spiralfeder kann somit anstelle der ersten Spiralfeder oder zusätzlich eingesetzt werden. Selbstverständlich können auch mehr als nur eine erste und eine zweite Spiralfeder eingesetzt werden, um die Federwirkung und die Federkraft zu erhöhen.

Gemäß einer bevorzugten Ausführungsform ist mindestens ein Elastomerteil angeordnet, das in oder an dem Dämpfer zum Abdämpfen von Beschleunigungswertmaxima der Schwingungs- bzw. Federungsbewegung der Vorrichtung angeordnet ist. Ein derartiges Abdämpfen der Beschleunigungswertmaxima, die durch schnelles Einleiten von externen Schwingungen bei plötzlichen Überfahren einer Kuppe oder einer tiefen Mulde auftreten können, weist den Vorteil auf, dass nicht der gesamte zur Verfügung stehende Federweg ausgeschöpft werden muss und die Gefahr des Erreichens eines Endanschlages der Federeinrichtung bzw. des Verschiebeweges von dem Oberteil gegenüber dem Unterteil besteht, auch wenn ein Dämpfer vorhanden ist. Somit kann ein derartiges Elastomerteil, welches als Elastomerlager ausgebildet sein kann, als geschlossenes poriges Federungselement in die Zugstufe des Dämpfers integriert werden, also derart platziert werden, dass die Wirkung des Elastomerlagers nur dann zur Geltung kommt, wenn der Dämpfer ausgezogen wird und somit aus seiner Ruhelage ausgelenkt wird. Ein derartiges Elastomerlager ist vorteilhaft innerhalb des Dämpfers oder an Dämpferanlenkpunkten, die als Verbindungspunkte zwischen dem Dämpfer und dem Unterteil oder Oberteil auftreten, angeordnet.

Das Elastomerteil lässt sich bei einer Schwingungseinleitung vorteilhaft vorerst komprimieren oder expandieren, je nachdem, wo das Elastomerteil innerhalb oder an dem Dämpfer angeordnet ist und wie es in seinen Materialeigenschaften ausgebildet ist. Dies findet so lange statt, bis ein Ölaustausch über einen Kolben innerhalb des Dämpfers zur Einleitung der normalen Funktionsweise des Dämpfers stattfindet. Sofern ein derartiges Elastomerteil in Kombination mit dem Dämpfer und in Kombination mit einer darin angeordneten hinsichtlich ihrer Federkraft linear wirkenden Feder verwendet wird, kann eine progressive Wirkung der Feder hinsichtlich der Geschwindigkeit erreicht werden. Dies bedeutet, dass sich die Geschwindigkeit der eingeleiteten Schwingung progressiv gegenüber dem zur Verfügung stehenden Federweg verhält und somit bei einer anfänglich hohen Geschwindigkeit eine starke Abdämpfung stattfindet. Dies wird als progressiver Dämpfer hinsichtlich der Geschwindigkeit herkömmlicherweise bezeichnet.

Bei der integrierten Feder kann es sich um eine Spiralstahlfeder handeln, die als gemeinsames Feder-Dämpfer-Element innerhalb oder außerhalb des Dämpfers - mit diesem verbunden - angeordnet ist.

Gemäß der durch die technischen Merkmale des Anspruchs 1 definierten Erfindung ist ein zweiter Dämpfer vorhanden, dessen erstes Ende ebenso mit dem Oberteil verbunden ist und der um die Achse oder eine weitere Achse schwenkbar gelagert ist. Dieser zweite Dämpfer kann ebenso wie der erste Dämpfer zum Abdämpfen der Schwingung des Oberteils in horizontaler Richtung gegenüber dem Unterteil dienen und ist erfindungsgemäß zusammen mit dem ersten Dämpfer in einer unausgelenkten Lage des federnd gelagerten Oberteils auf einer gemeinsamen Geraden hinsichtlich der Längsausdehnung der beiden Dämpfer angeordnet. Dies bedeutet, dass in der Ruhelage die Dämpfer in Fahrzeugbreitenrichtung hintereinander angeordnet sind, sofern die Federwegsrichtung in Fahrzeuglängsrichtung verläuft, und an ihren zweiten Ende beispielsweise gemeinsam an der Achse schwenkbar angeordnet sind, wohingegen ihre ersten Enden an zwei verschiedenen Bauteilen des Oberteils, die sich mit Verschieben des Oberteils bei Einleitung einer Schwingung ebenso verschieben, befestigt sein können.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Darstellung das Grundprinzip der erfindungsgemäßen Fahrzeugschwingungsabfangsvorrichtung gemäß einer Ausführungsform der Erfindung;
- Fig. 2a: in einer schematischen Darstellung einen Ausschnitt eines Fahrzeugsitzes mit einer zur Erfindung nicht gehörenden Fahrzeugschwingungsabfangsvorrichtung in einer Ruhelage, wobei nur ein Dämpfer vorhanden ist;
- Fig. 2b: in einer schematischen Darstellung und in einer Draufsicht einen Ausschnitt eines Fahrzeugsitzes mit einer zur Erfindung nicht gehörenden Fahrzeugschwingungsabfangsvorrichtung in einer ausgefederten bzw. ausgelenkten Lage, wobei nur ein Dämpfer vorhanden ist; und
- Fig. 3: in einem Diagramm die Auftragung einzelner gemessener Werte eines Dämpferweges im Verhältnis zu einem zur Verfügung stehenden Federweg sowie Geschwindigkeitsverhältniswerte für eine Fahrzeugschwingungsabfangsvorrichtung gemäß der vorliegenden Erfindung.

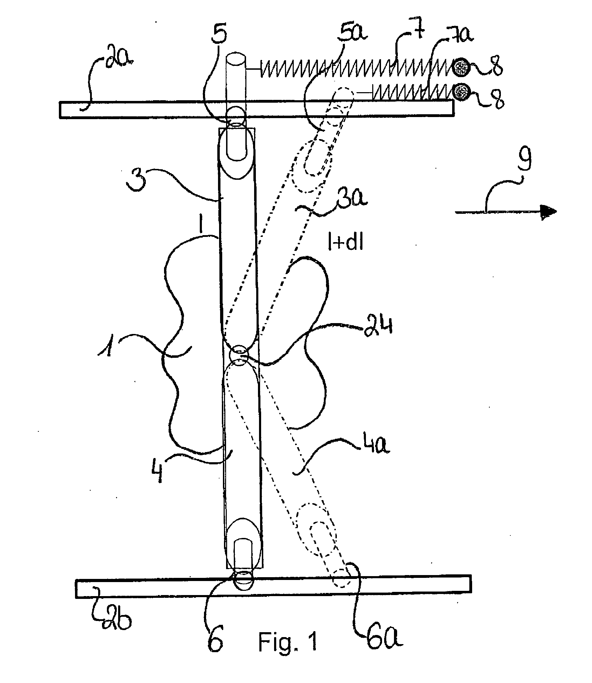

In Fig. 1 ist in einer schematischen Darstellung das Grundprinzip der erfindungsgemäßen Fahrzeugschwingungsabfangsvorrichtung gemäß einer Ausführungsform der Erfindung gezeigt. Dieser Darstellung ist deutlich zu entnehmen, dass an einem Unterteil 1, welches hier nur ausschnittsweise dargestellt ist, und an zwei Teilen 2a, 2b eines Oberteils zwei Dämpfer 3, 4 befestigt sind. Die Darstellung der Dämpfer gemäß den Bezugszeichen 3 und 4 zeigt die Dämpfer in Ruhelage, wohingegen die Darstellung gemäß den Bezugszeichen 3a und 4a beide Dämpfer in ausgelenkter bzw. ausgefederter Lage zeigen.

Ein erstes Ende 5 bzw. 5a ist an dem ersten Bauteil 2a des Oberteiles befestigt und wird bei einem Verschieben des Oberteiles gemäß dem Pfeil 9 - in Bildebene betrachtet nach rechts - zusammen mit dem Bauteil 2a nach rechts verschoben. Dies geschieht dadurch, dass eine externe Schwingung beispielsweise von rechts durch Überfahren einer scharfen Kuppe auf die Vorrichtung eingeleitet wird. Dies hat zur Folge, dass das Unterteil 1 kurzzeitig gestoppt oder verlangsamt wird, wohingegen das Oberteil mit den Bauteilen 2a und 2b nach rechts schwingend verschoben wird.

Ebenso wird ein erstes Ende 6 bzw. 6a bei einer derartigen Schwingungseinleitung und ein Verschieben des Oberteils in Richtung des Pfeils 9 durch das Bauteil 2b nach rechts verschoben.

Die Gesamtdarstellung gemäß Fig. 1 ist derart zu verstehen, dass beispielsweise - in Bildebene betrachtet - sich von links nach rechts die Fahrzeuglängsrichtung erstreckt und auf der rechten Seite die Fahrzeugvorderseite und auf der linken Seite die Fahrzeugrückseite ist. Vorzugsweise handelt es sich bei dieser gemäß Fig. 1 dargestellten Grundprinzipskizze um eine Vorrichtung für einen Fahrzeugsitz und kann auch für eine Fahrzeugkabine, beispielsweise für Traktoren, verwendet werden. Demzufolge erstrecken sich die beiden Dämpfer 3, 4 auf einer Gerade verlaufend in Fahrzeugbreitenrichtung, also in Bildebene betrachtet von oben nach unten.

Sobald ein Verschieben des Oberteils mit seinen zwei Bauteilen 2a, 2b von links nach rechts, also in Fahrzeugvorwärtsrichtung stattfindet, findet ein Verschieben der beiden Dämpfer gemäß den Bezugszeichen 3a und 4a an ihren ersten Enden 5a und 6a nach rechts statt und ebenso findet eine Schwenkbewegung um eine Achse 24, die mit dem Unterteil verbunden ist, statt. Vorzugsweise sind beide Dämpfer 3 und 4 horizontal angeordnet, also zwischen dem Unterteil 1 und dem Oberteil 2.

Gegen die eingeleitete externe Schwingungsbewegung und das Bewegen des Oberteils nach vorne bzw. nach rechts wirkt die Federkraft der in diesem Fall als Spiralfeder ausgebildete Feder 7. Die Feder wird bei einem Nachvorneverschieben des Oberteils in diesem Fall komprimiert, wie es aus der Darstellung gemäß dem Bezugszeichen 7a hervorgeht. Die Feder 7 bzw. 7a ist beispielsweise an einem Zapfen 8 einerseits und an dem Ende 5 des Dämpfers 3 andererseits befestigt, wobei der Zapfen 8 gegenüber dem Unterteil eine Verbindung aufweist. Bei dem zweiten Dämpfer 4 ist diese Feder nicht dargestellt, kann jedoch ebenso vorhanden sein.

Sofern zwei Dämpfer, wie bei der vorliegenden Erfindung der Fall ist, verwendet werden, kann eine resultierende Kraftkomponente senkrecht zu der Bewegungsrichtung ausgeglichen werden. Der zweite Dämpfer stellt in der Lenkfunktion, also in Fahrzeuglängsrichtung, zusätzlich eine Verdopplung der resultierenden Dämpferkraft in Längsrichtung dar. Diese Auslegung bringt eine Übersetzung und eine Anpassung der progressiv wirkenden Dämpferkennlinie mit sich.

Alternativ zur Anbringung der Schwenkachse 24 an einem Ende des Dämpfers, wie es in Fig. 1 gezeigt wird, kann die Anbringung der Schwenkachse auch in jedem Abschnitt des Dämpfers in Längsrichtung betrachtet erfolgen. Dies bedeutet, dass, wenn beispielsweise die Schwenkachse ungefähr in der Mitte der Längsausdehnung des Dämpfers angeordnet wäre, ein weniger langer Hebelarm mit beispielsweise einem ersten Ende 5a mit dem sich verschiebenden Oberteil verbunden ist. Dies hat eine geringere Kreisbahn während der Verschiebebewegung des Oberteils und der Schwenkbewegung des Dämpfers zur Folge und führt zu einem größeren Schwenkbereich des Dämpfers. Als Folge hiervon wird eine Dämpferkolbengeschwindigkeit erreicht, die annähernd im Randbereich des Federwegendes die Federweggeschwindigkeit der Feder aufweist. Somit kann, je kürzer ein Hebelarm des Dämpfers von der Schwenkachse zu dem Oberteil aufgrund des Verschiebens der Schwenkachse ist, desto früher die Dämpferkolbengeschwindigkeit die Federweggeschwindigkeit erreichen. Hierfür ist die Schwenkachse seitlich bzw. an der Außenseite des Dämpfer angebracht, um die Funktion des Dämpfers aufgrund einer Bohrung für die Anbringung der Schwenkachse nicht zu beeinträchtigen.

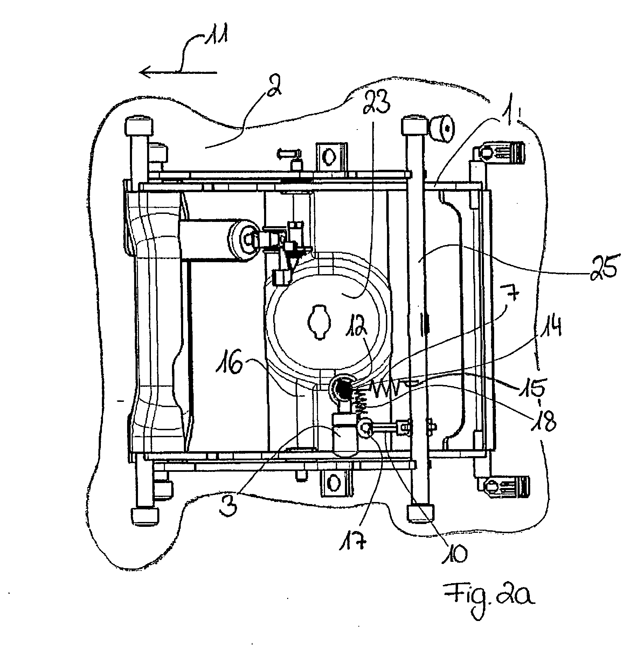

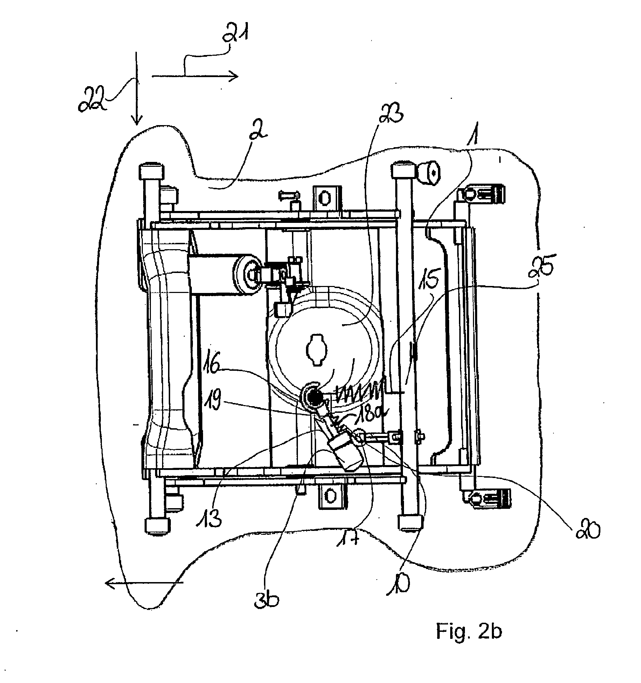

In Fig. 2a und 2b ist jeweils in einer Draufsicht ein Teil eines Fahrzeugsitzes mit einer nicht erfindungsgemäßen Fahrzeugschwingungsabfangsvorrichtung dargestellt, wobei in Fig. 2a die Fahrzeugschwingungsabfangsvorrichtung in einer Ruhelage und in Fig. 2b in einer ausgefederten bzw. ausgelenkten Lage befindet. Gleiche und gleich bedeutende Bezugszeichen werden für gleiche Bauteile verwendet.

Mit dem Bezugszeichen 21 ist die Fahrzeuglängsrichtung und mit dem Bezugszeichen 22 die Fahrzeugbreitenrichtung angegeben, wobei beide Richtungen 21, 22 eine Ebene aufspannen können, auf der oder auf einer parallel zu dieser Ebene weiteren Ebene der Dämpfer 3 bzw. 3b mit oder ohne einer weiteren Spiralfeder 7 bzw. 7b und/oder 18 bzw. 18a angeordnet sein kann.

Dieser Darstellung ist deutlich zu entnehmen, dass das Unterteil 1 aus einer Vielzahl an Bauteilen besteht, die hauptsächlich zu der Anordnung eines Scherengestells für die Höhenverstellung des Fahrzeugsitzes und für die Anordnung dieses Scherengestells innerhalb von Führungsschienen, die an der Karosserie bodenseitig befestigt sind, dienen. Unter anderem weist das Unterteil mit dem dazugehörigen Scherengestell eine in Fahrzeugbreitenrichtung 22 sich erstreckende Stange 25 auf, an der ein Auslegerelement 10 als Befestigungselement für den Dämpfer 3 angeordnet ist. Dieser Ausleger 10 zeigt an seinem einen Ende einen Schwenkkopf 17, an welchem der Dämpfer 3 angeordnet ist und um welchen dieser Dämpfer 3 herumgeschwenkt werden kann. Dies geht deutlich aus einem Vergleich der Figuren 2a und 2b hervor. Der Dämpfer 3 ist somit mit seinem Grundkörper an dem Schwenkkopf 17 und damit an dem Unterteil des Fahrzeugsitzes und der Fahrzeugschwingungsabfangsvorrichtung befestigt und mit seinem ersten Ende, welches greifarmmäßig ausgebildet ist und mit dem Bezugszeichen 16 bezeichnet ist, an einem bolzenartigen Element 12 befestigt, welches eine Schwenkbewegung zwischen dem Element 16 und dem Bolzen 12 zulässt. Der Bolzen 12 ist wiederum an einem hier nur stilistisch und durchsichtig dargestellten Oberteil 2 befestigt.

Wenn man davon ausgeht, dass - im Bildebene betrachtet - auf der rechten Seite die Fahrzeugvorderseite ist und auf der linken Seite die Fahrzeugrückseite ist, so wird bei einem Rückwärtsfahren des Fahrzeuges und bei einem gleichzeitigen Überfahren einer Kuppe das Oberteil 2 gemäß dem Pfeil 11 nach links - also zur Fahrzeugrückseite hin - verschoben und gerät durch diese eingeleitete Schwingung in eine Schwingungsbewegung. Hierdurch wird eine Feder 7 ausgelenkt, wobei dies mit dem Bezugszeichen 7b verdeutlicht wird. Die Feder ist mit ihrem ersten Ende 14 an dem Bolzenelement 12 befestigt und weist somit eine Verbindung zum Oberteil 2 auf, wohingegen sie mit ihrem weiteren Ende 15 an dem Unterteil - in diesem Fall an dem Stangenelement 25 - befestigt ist.

Zugleich wird durch eine derartige Verschiebung des Oberteils nach links bzw. in Rückwärtsrichtung der Dämpfer 3 gemäß dem Bezugszeichen 3b um den Schwenkkopf 17 verschwenkt und weist somit eine gegenüber der Ruhelage geneigte Lage auf. Dies führt dazu, dass gemäß dem Bezugszeichen 13 das Dämpfungselement auf Zug beansprucht wird und eine dämpfende Gegenkraft dafür sorgt, dass die Schwingungsbewegung des Oberteils, welche momentan nach links gerichtet ist, in ihrer Bewegung abgedämpft wird.

Alternativ oder zusätzlich kann eine weitere Feder 18 - als Spiralfeder ausgebildet - die in der ausgefederten Lage mit dem Bezugszeichen 18a dargestellt wird, parallel zu oder innerhalb des Dämpfers 3 bzw. 3b angeordnet sein und mit der Bewegung des Dämpfers ebenso auf Zug beansprucht werden. Dies geschieht dadurch, dass das erste Ende 19 der Feder 18 ebenso an dem Bolzenelement 12 oder an dem ersten Ende des Dämpfers 3b befestigt ist und ein zweites Ende 20 der Feder 18 bzw. 18a an dem Grundkörper des Dämpfers 3b oder dem Schwenkkopf 17 angeordnet ist.

Aus dieser Darstellung wird deutlich, dass bei einem Verschieben des Oberteils in Richtung des Pfeils 11 aufgrund einer eingeleiteten Schwingung das Dämpfungselement ebenso wie die Federn 7, 18 ausgelenkt werden, wobei das Dämpfungselement vorteilhaft eine dämpfende Gegenkraft gegen die nach links bzw. in Rückwärtsrichtung gerichtete Schwingungsbewegung erzeugt.

Die in Fig. 2a und 2b gezeigten Federn 7 bzw. 7b sowie 18 bzw. 18a werden bei der ausgefederten Lage auf Zug beansprucht, wohingegen die in Fig. 1 gezeigte Feder 7 bei einer ausgefederten Lage auf Druck beansprucht wird.

Der Schwenkkopf 17 mit dem Element 10 ist in Kombination mit dem Dämpfer deshalb derart angeordnet, da lediglich ein begrenzter Bauraum innerhalb des Fahrzeugsitzes zur Verfügung steht. Der Schwenkkopf 17 ist somit zugleich ein Dämpferanschlusspunkt und ist seitlich an dem Grundkörper des Dämpfers angebracht.

Mit dem Bezugszeichen 23 ist stilistisch eine in Vertikalrichtung wirkende Luftfeder dargestellt.

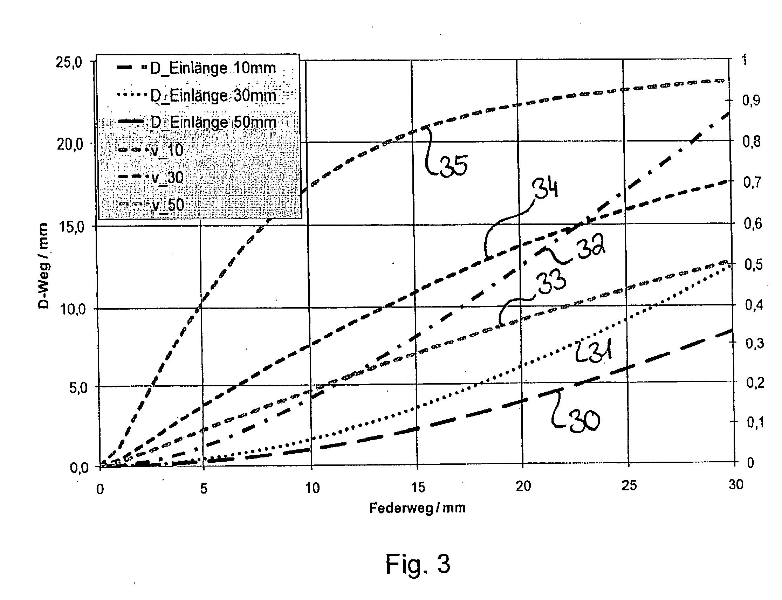

In Fig. 3 werden in einem Diagramm verschiedene Werte zu dem Dämpferweg und dem zur Verfügung stehenden Federweg sowie Geschwindigkeitsverhältnisse für die erfindungsgemäße Fahrzeugsschwingungsabfangsvorrichtung dargestellt. Auf der linken Seite ist über die Ordinate der gemessene Dämpferweg in mm und auf der Abszisse ist der Federweg in Federwegrichtung - ebenso in mm angegeben - aufgetragen.

Es werden Dämpfer mit verschiedenen Einlängen dargestellt. Dies bedeutet, dass die Dämpfer in ihrer Schwenkaufhängung, also die Anordnung der Schwenkachse, unterschiedlich ausgebildet sind. Die Schwenkachse kann demzufolge in unterschiedlichen Bereichen entlang der Längsausdehnung des Dämpfers angeordnet sein, wobei eine geringe Einlänge die Anordnung einer Schwenkachse mehr zu dem Oberteil hin und damit zu der Feder hin und eine große Einlänge die Anordnung der Schwenkachse weiter weg von dem Oberteil bedeutet.

In Abhängigkeit von der Einlänge kann man einen weniger oder mehr ausgeprägten weichen Mittenbereich der Fahrzeugschwingungsabfangsvorrichtung realisieren. Werden zum Ende des Federweges hin höhere Dämpferkräfte benötigt, wählt man einen Dämpfer härterer Zugstufendämpfung.

Das Diagramm zeigt den zurückgelegten Kolbenweg des Dämpfers bezogen auf den Federweg der Feder in eine Richtung. Dies entspricht den Kurven 30, 31 und 32. Bei einer kurzen Schenkelauslegung, beispielsweise bei einer Einlänge von 10 mm, legt der Dämpferkolben einen Weg von 4 mm zurück, während der Federweg der Feder bereits 10 mm beträgt. Bei einer langen Schenkelauslegung gemäß Kurve 30, beispielsweise mit einer Einlänge von 50 mm, legt der Kolben des Dämpfers einen Weg von 1 mm zurück, wohingegen der zurückgelegte Federweg bereits 10 mm beträgt.

Die Kurven 33, 34 und 35 geben die daraus resultierenden Geschwindigkeiten der Schwingungsbewegung entlang des Federweges in Verhältnis zu der Geschwindigkeit des Dämpfers entlang des Dämpferweges während seines ein- und ausfahrenden Zustandes wieder. Bei einer kurzen Schenkelauslegung mit einer Einlänge von 10 mm gemäß Kurve 35 wird bei einem Federweg von 10 mm die Geschwindigkeit des Dämpfers mit einem Faktor von 0,7 übertragen, während bei einem Federweg von 25 mm die Geschwindigkeit mit 0,9 und damit die jeweilige Dämpferkraft mit 0,9 verstärkt bzw. geschwächt bei einem Ausfahren und Einfahren des Dämpfers übertragen wird.

Bei einer langen Schenkelauslegung mit einer Einlänge von 50 mm gemäß der Kurve 33 hingegen wirkt die geschwindigkeitsabhängige Progression des Dämpfers bei 10 mm mit einem Faktor 0,19, wohingegen bei einem Federweg von 25 mm die jeweilige Dämpferkraft mit 0,44 verstärkt bzw. geschwächt wird. Die Kurven 31 und 34 entsprechen jeweils den zugehörigen Werten für einen Dämpfer mit einer Einlänge von 30 mm.

Somit geht die geschwindigkeitsabhängige Progression der Dämpfer mit einem unterschiedlichen Übersetzungsverhältnis je nach ausgefederter Stellung der Fahrzeugschwingungsabfangsvorrichtung in der eigentlichen Bewegungsrichtung mit dem Federweg einher, wobei diese Bewegung eine degressive wegabhängige Bewegung ist. Durch diese degressive

Übersetzung kann ein progressiv wirkender Dämpfer in der Mitte des Federweges weich ausgelegt werden.

### Bezugszeichenliste

- 1: Unterteil
- 2: Oberteil
- 2a, 2b: Teile des Oberteils
- 3, 3a, 3b, 4, 4a: Dämpfer
- 5, 5a: erstes Ende
- 6, 6a: erstes Ende
- 7, 7a, 7b, 18, 18a: Feder
- 8: Zapfen
- 9: Pfeil
- 10: Auslegerelement
- 11: Pfeil
- 12: bolzenartiges Element
- 13: Dämpfungselement
- 14: erstes Ende der Feder
- 15: weiteres Ende der Feder
- 16: erstes Ende
- 17: Schwenkkopf
- 19: erstes Ende der Feder
- 20: zweites Ende der Feder
- 21: Fahrzeugslängsrichtung
- 22: Fahrzeugbreitenrichtung
- 23: Luftfeder
- 24: Achse
- 25: Stange
- 30, 31, 32, 33, 34, 35: Kurven

## Patentansprüche

1. Fahrzeugschwingungsabfangsvorrichtung mit einem Unterteil (1) und einem gegenüber dem Unterteil (1) , im Einbau in Fahrzeuglängsrichtung (21) und/oder Fahrzeugbreitenrichtung (22) mittels einer Federeinrichtung (7, 7a, 7b, 8; 18) federnd gelagertem Oberteil (2, 2a, 2b), wobei die Fahrzeuglängsrichtung (21) und/oder die Fahrzeugbreitenrichtung (22) Federwegrichtungen (9, 11) darstellen,
mit
mindestens einem Dämpfer (3, 3a; 4, 4a), der sich , im Einbau in einer von der Fahrzeuglängsrichtung (21) und der Fahrzeugbreitenrichtung (22) aufgespannten Ebene mit seiner Längsausdehnung erstreckt, und um eine senkrecht zur Ebene ausgerichtete Achse (17, 24) am Unterteil (1) schwenkbar gelagert ist und mit einem ersten Ende (5, 5a; 6, 6a; 16) mit dem Oberteil (2) verbunden ist, und einem zweiten Dämpfer (4, 4a), dessen erstes Ende (6, 6a) ebenso mit dem Oberteil (2b) verbunden ist und der um die Achse (24) oder eine weitere Achse schwenkbar gelagert ist, **dadurch gekennzeichnet, dass** die beiden Dämpfer (3, 4) in einer unausgelenkten Lage des federnd gelagerten Oberteils (2) in ihrer Längsausdehnung auf einer gemeinsamen Geraden liegen.

2. Fahrzeugschwingungsabfangsvorrichtung nach Anspruch 1,
**dadurch gekennzeichnet, dass**
der Dämpfer (3, 4) in einer unausgelenkten Lage des federnd gelagerten Oberteils (2) sich in seiner Längsausdehnung senkrecht zur Federwegrichtung (9, 11) erstreckt.

3. Fahrzeugschwingungsabfangsvorrichtung nach Anspruch 1 oder 2,
**dadurch gekennzeichnet, dass**
der Dämpfer (3, 3a, 3b; 4, 4a) derart ausgebildet ist, dass bei Zugbeanspruchung des Dämpfers (3, 3a, 3b; 4, 4a) eine dämpfend wirkende erste Dämpferkraft unterschiedlich zu der bei der Druckbeanspruchung des Dämpfers (3, 3a, 3b; 4, 4a) dämpfend wirkenden zweiten Dämpferkraft ist.

4. Fahrzeugschwingungsabfangsvorrichtung nach einem der vorangegangenen Ansprüche,
**dadurch gekennzeichnet, dass**
die Federeinrichtung mindestens eine sich in Federwegrichtung (9, 11) erstreckende erste Spiralfeder (7, 7a, 7b) umfasst, deren erstes Ende (14) mit dem Oberteil (2) und deren zweites Ende (15) mit dem Unterteil (1) verbunden ist.

5. Fahrzeugschwingungsabfangsvorrichtung nach einem der vorangegangenen Ansprüche,
**dadurch gekennzeichnet, dass**
die Federeinrichtung mindestens eine im oder am Dämpfer (3, 3a, 3b; 4, 4a) angeordnete zweite Spiralfeder (18) umfasst, deren erstes Ende (19) mit dem ersten Ende (16) des Dämpfers (3, 3a, 3b; 4, 4a) und deren zweites Ende (20) mit einem zweiten Ende des Dämpfers (3, 3,a, 3b; 4, 4a) verbunden ist.

6. Fahrzeugschwingungsabfangsvorrichtung nach einem der vorangegangenen Ansprüche,
**gekennzeichnet durch**
mindestens ein Elastomerteil, das in oder an dem Dämpfer (3, 3a, 3b; 4, 4a) zum Abdämpfen von Beschleunigungswertmaxima der Schwingungs- bzw. Federungsbewegung der Vorrichtung angeordnet ist.

## Claims

1. Vehicle oscillation absorbing device with a lower part (1) and an upper part (2, 2a, 2b) spring-mounted in relation to the mounted lower part (1) in the vehicle longitudinal direction (21) and/or vehicle width direction (22) by means of a spring device (7, 7a, 7b, 8; 18), wherein the vehicle longitudinal direction (21) and/or the vehicle width direction (22) constitute spring travel directions (9, 11), with
at least one damper (3, 3a; 4, 4a) which extends in mounted state with its longitudinal extent in a plane defined by the vehicle longitudinal direction (21) and the vehicle width direction (22), and is mounted pivotably on the lower part (1) about an axis (17, 24) oriented perpendicular to the plane, and is connected with a first end (5, 5a; 6, 6a; 16) to the upper part (2) and a second damper (4, 4a), the first end (6, 6a) of which is also connected with the upper part (2b) and which is mounted pivotably about the axis (24) or a further axis, **characterised in that**
the two dampers (3, 4) in an undeflected position of the spring-mounted upper part (2) are arranged in their longitudinal extent on a common straight line.

2. Vehicle oscillation absorbing device according to claim 1, **characterised in that** the damper (3, 4) in the assembly in an undeflected position of the spring-mounted upper part (2) extends in its longitudinal extent perpendicular to the spring travel direction (9, 11).

3. Vehicle oscillation absorbing device according to claim 1 or 2, **characterised in that** the damper (3, 3a, 3b; 4, 4a) is formed in such a way that when tensile loading is applied to the damper (3, 3a, 3b; 4, 4a) a first damper force with damping effect is different from the second damping force with damping effect when compressive stress is applied to the damper (3, 3a, 3b; 4, 4a).

4. Vehicle oscillation absorbing device according to any of the preceding claims, **characterised in that** the spring device comprises at least one first coil spring (7, 7a, 7b) extending in the spring travel direction (9, 11), the first end (14) of which is connected with the upper part (2) and the second end (15) of which is connected with the lower part (1).

5. Vehicle oscillation absorbing device according to any of the preceding claims, **characterised in that** the spring device comprises at least one second coil spring (18) arranged in or on the damper (3, 3a, 3b; 4, 4a), the first end (19) of which is connected with the first end (16) of the damper (3, 3a, 3b; 4, 4a) and the second end (20) of which is connected with the second end of the damper (3, 3a, 3b; 4, 4a).

6. Vehicle oscillation absorbing device according to any of the preceding claims, **characterised by** at least one elastomer part arranged in or on the damper (3, 3a, 3b; 4, 4a) to attenuate acceleration maxima of the oscillation or springing movement of the device.

## Revendications

1. Dispositif d'amortissement de vibrations pour un véhicule avec une partie inférieure (1) et une partie supérieure (2, 2a, 2b) posée sur ressort, au moyen d'un équipement de ressort (7, 7a, 7b, 8 ; 18), par rapport à la partie inférieure (1) dans la direction longitudinale du véhicule (21) et/ou dans la direction de la largeur du véhicule (22) dans le montage, dans lequel la direction longitudinale du véhicule (21) et/ou la direction de la largeur du véhicule (22) constituent des directions de course de ressort (9, 11),
avec au moins un amortisseur (3, 3a ; 4, 4a) qui, dans le montage, s'étend en suivant son expansion longitudinale dans un plan tendu par la direction longitudinale du véhicule (21) et la direction de la largeur du véhicule (22), et qui est posé de manière pivotante contre la partie inférieure (1) autour d'un axe (17, 24) orienté perpendiculairement au plan et est relié à la partie supérieure (2) par une première extrémité (5, 5a ; 6, 6a ; 16), et avec un deuxième amortisseur (4, 4a) dont la première extrémité (6, 6a) est également reliée à la partie supérieure (2b) et qui est monté de manière pivotante autour de l'axe (24) ou d'un autre axe,
**caractérisé en ce que** les deux amortisseurs (3, 4), dans une position non déviée de la partie supérieure (2) posée sur ressort, reposent sur une droite commune dans leur expansion longitudinale.

2. Dispositif d'amortissement de vibrations pour un véhicule selon la revendication 1, **caractérisé en ce que** l'amortisseur (3, 4), dans une position non déviée de la partie supérieure (2) posée sur ressort, s'étend perpendiculairement à la direction de course de ressort (9, 11) en suivant son expansion longitudinale.

3. Dispositif d'amortissement de vibrations pour un véhicule selon la revendication 1 ou 2, **caractérisé en ce que** l'amortisseur (3, 3a, 3b ; 4, 4a) est conçu de telle sorte qu'une première force d'amortisseur exerçant une action d'amortissement en cas de sollicitation en traction de l'amortisseur (3, 3a, 3b ; 4, 4a) est différente de la deuxième force d'amortisseur exerçant une action d'amortissement en cas de sollicitation en compression de l'amortisseur (3, 3a, 3b ; 4, 4a).

4. Dispositif d'amortissement de vibrations pour un véhicule selon l'une des revendications précédentes, **caractérisé en ce que** l'équipement de ressort comprend au moins un premier ressort spiral (7, 7a, 7b) s'étendant dans la direction de course de ressort (9, 11) et dont la première extrémité (14) est reliée à la partie supérieure (2) et la deuxième extrémité (15) est reliée à la partie inférieure (1).

5. Dispositif d'amortissement de vibrations pour un véhicule selon l'une des revendications précédentes, **caractérisé en ce que** l'équipement de ressort comprend au moins un deuxième ressort spiral (18) agencé dans ou contre l'amortisseur (3, 3a, 3b ; 4, 4a) et dont la première extrémité (19) est reliée à la première extrémité (16) de l'amortisseur (3, 3a, 3b ; 4, 4a) et la deuxième extrémité (20) est reliée à une deuxième extrémité de l'amortisseur (3, 3a, 3b ; 4, 4a).

6. Dispositif d'amortissement de vibrations pour un véhicule selon l'une des revendications précédentes, **caractérisé par** au moins un élément en élastomère agencé dans ou contre l'amortisseur (3, 3a, 3b ; 4, 4a) pour amortir les maxima de valeur d'accélération du mouvement de vibration ou de suspension du dispositif.
